# EUROPEAN PATENT APPLICATION

(11) **EP 2 073 533 A1**
(43) Date of publication of application: **24.06.2009**
(21) Application number: 07829734.8
(22) Date of filing: 12.10.2007
(51) Int. Cl.: H04N 5/232, H04N 5/92

(54) **IMAGING DEVICE**

(30) Priority: 13.10.2006 JP 2006280158
(71) Applicant: Olympus Corporation, Shibuya-ku Tokyo 151-0072 (JP)
(72) Inventor: HANEDA, Kazuhiro, Tokyo 1510072 (JP)
(74) Representative: von Hellfeld, Axel
(86) International application number: PCT/JP2007/069998
(87) International publication number: WO 2008/044772

(57) **Abstract**

The present invention relates to am image-pickup device capable of variable-frame rate image-pickup in which a frame rate is modified during image-pickup, and includes a switch 52 that an operator manipulates during image-pickup to input a modification command relating to a frame rate, and a frame rate controller 51 that a signal corresponding to a manipulated variable of the switch 52 is inputted to, the frame rate controller 51 controlling the frame rate based on a frame rate modification command relating indicated by the inputted signal. In this image-pickup device, since the image-pickup frame rate is controlled based on a command inputted by manipulating the switch 52 during image-pickup, the frame rate can be arbitrarily modified in accordance with the movement of a subject during image-pickup.

## Description

### TECHNICAL FIELD

The present invention relates to an image-pickup device capable of variable-frame rate image-pickup in which a frame rate is varied during image-pickup.
Priority is claimed on Japanese Patent Application No. 2006-280158, filed October 13, 2006, the content of which is incorporated herein by reference.

### BACKGROUND ART

To append special effects to an image in conventional film production such as television and movies, the number of image-pickup frames per second, i.e. the frame rate, is varied. For example, when the frame rate of an image-pickup signal is made faster than the frame rate of the reproduction signal, an image reproduced at the frame rate of the reproduction signal becomes a slow-reproduction image. When the frame rate of the image-pickup signal is made slower than the frame rate of the reproduction signal, an image reproduced at the frame rate of the reproduction signal becomes a high-speed image. The speeds of the slow-reproduction image and the high-speed image are determined by the relative ratio between the frame rate of the image-pickup signal and the frame rate of the reproduction signal, and, when the frame rate of the reproduction signal is constant, they can be adjusted by varying the frame rate of the image-pickup signal.

Recently, when picking up an image in the manner described above, an electronic image-pickup device in which the frame rate of the image-pickup signal can be varied is being used. For example, Patent Document 1 discloses an image-pickup device in which the frame rate of the image-pickup signal can be modified by an operator who manipulates a control switch. In this image-pickup device, the operator performs image-pickup after setting the type of the frame rate he wishes to set for image-pickup, and the image-pickup time with respect to each frame rate, in the image-pickup device prior to image-pickup.
As for the method of modifying the frame rate of the image-pickup signal, when the control switch is manipulated at the start of image-pickup, the frame rate is automatically modified in each set time period in accordance with the contents that were set. This makes it possible to pick up an image at various preset frame rate of the image-pickup signal, obtaining an image output having special effects when the signal is reproduced. [Patent Document 1] Japanese Patent Application, First Publication No. 2005-136754.

### DISCLOSURE OF THE INVENTION

### [Problems to be Solved by the Invention]

However, in the frame rate modification method described in Patent Document 1, it is necessary to set frame rate at the time of picking up of the image, an image-pickup time for each frame rate, and a modification sequence and the like for these various frame rates, prior to image-pickup. Consequently, when the movement of the subject whose image is being picked up is not constant, there is a problem that it is difficult to arbitrarily modify the frame rate in accordance with the movement of the subject. Also, when setting contents of the frame rate are numerous and complex, such as when the image-pickup time is very long or when the frame rate is varied to short clips, it becomes difficult for the operator to remember how the frame rate will vary after image-pickup starts. This results in a problem that the operator is liable to miss the timing for picking up an image at a predetermined frame rate with respect to a predetermined movement of the subject.

Moreover, since the frame rate during image-pickup can only be varied in accordance with the preset contents, there is a problem that, when the operator desires to pickup an image at an unset frame rate in accordance with an unexpected movement of the subject, he cannot pick up an image at the desired frame rate. For example, even if the operator desires to gradually control the frame rate to pickup an image of a specific movement of the subject at a specific frame rate (maximum speed), when the time until that specific movement occurs is not fixed, it might be impossible for him to determine how to vary the frame rate, and consequently impossible to set a desired frame rate when the subject makes the specific movement.

The present invention has been achieved in view of the above, and aims to provide an image-pickup device whose frame rate can be modified arbitrarily in accordance with the movement of a subject whose image is being picked up.

The invention has been achieved to solve the above problems, and accordingly provides an image-pickup device that includes an image-pickup unit capable of variable-frame rate image-pickup, a manipulation unit that a user can manipulate to input a modification command relating to a frame rate, and a frame rate control unit that controls the frame rate of the image-pickup unit based on the modification command inputted by manipulating the manipulation unit during image-pickup.

In the image-pickup device of the invention, when the frame rate reaches a target value, the frame rate control unit fixes the frame rate at the target value.

Alternatively in the image-pickup device of the invention, the target value is a maximum value of the frame rate, and, when the frame rate reaches the target value and the modification command indicates a command to increase the frame rate, the frame rate control unit fixes the frame rate at the target value.

Alternatively in the image-pickup device of the invention, the target value is a minimum value of the frame rate, and, when the frame rate reaches the target value and the modification command indicates a command to decrease the frame rate, the frame rate control unit fixes the frame rate at the target value.

Alternatively, the image-pickup device of the invention further includes a frame rate display unit that displays the target value and a present frame rate.

Alternatively in the image-pickup device of the invention, based on a preset correspondence relationship between a manipulated variable of the manipulation unit and a value of the frame rate, the frame rate control unit varies the frame rate to a value corresponding to a manipulated variable of the manipulation unit during image-pickup.

Alternatively in the image-pickup device of the invention, based on a preset correspondence relationship between a manipulated variable of the manipulation unit and a variation of the frame rate, the frame rate control unit varies the frame rate according to the variation corresponding to the manipulated variable of the manipulation unit during image-pickup.

Preferably, the image-pickup device of the invention further includes a time-calculating unit that, when the frame rate is continuously varied according to the variation corresponding to the manipulated variable of the manipulation unit during image-pickup, calculates the time taken for the frame rate to reach the target value.

Preferably, the image-pickup device of the invention further includes a time display unit that displays the time taken for the frame rate to reach the target value.

Preferably, the image-pickup device of the invention further includes a storage unit that stores a plurality of types of the correspondence relationships beforehand, and a selecting unit that, based on a command from a user, selects the correspondence relationship that the frame rate control unit refers to.

Preferably in the image-pickup device of the invention, a user manipulates the manipulation unit to input a modification command relating to a zoom state, and the control unit controls the frame rate based on the zoom state set by a manipulation of the manipulation unit during image-pickup.

### EFFECTS OF THE INVENTION

According to the invention, since the frame rate of the image-pickup unit is controlled based on commands inputted by manipulating the manipulation unit during image-pickup, an advantage is obtained that the frame rate can be arbitrarily modified during image-pickup in accordance with the movement of the subject.

### BRIEF DESCRIPTION OF THE DRAWINGS

[FIG. 1] A block diagram of the configuration of an image-pickup device according to a first embodiment of the invention.
[FIG. 2] A block diagram of the configuration of a frame rate-setting unit of an image-pickup device according to the first embodiment of the invention.
[FIG. 3] An explanatory diagram of the relationship between a manipulated variable of a switch and a frame rate variation of an image-pickup device according to the first embodiment of the invention.
[FIG. 4] A reference diagram of the state of frame rate control in the first embodiment of the invention.
[FIG. 5] A reference diagram of an example of a frame rate display in the first embodiment of the invention.
[FIG. 6] A block diagram of the configuration of a frame rate-setting unit of an image-pickup device according to a second embodiment of the invention.
[FIG. 7] Reference diagrams of contents of frame rate tables in the second embodiment of the invention.
[FIG. 8] A reference diagram of contents of a frame rate table in the second embodiment of the invention.

### REFERENCE NUMERALS

- 1: Lens
- 2: Image-pickup element (Image-pickup unit)
- 3: Drive controller
- 4: Image-pickup signal processor
- 5: Frame rate-setting unit
- 6: Frame rate converter
- 7: Storage device
- 8: Display device (Frame rate display unit, Time display unit)
- 51: Frame rate controller (Frame rate control unit)
- 52: Switch (Manipulation unit)
- 53: Frame rate increase/decrease amount setting unit
- 53a: Increase/decrease amount inputting unit
- 53b: Increase/decrease amount storage unit
- 54: Target value setting unit
- 54a: Target value inputting unit
- 54b: Target value storage unit
- 55: Frame rate transition time calculator
- 55a: Frame rate table-inputting unit
- 55b: Frame rate table storage unit (Storage unit)
- 55c: Frame rate table-selecting unit (Selecting unit)
- 56: Frame rate transition time calculator (Time calculating unit)
- 57: Controller I/F unit

### BEST MODES FOR CARRYING OUT THE INVENTION

Embodiments of the invention will be explained with reference to the drawings.

### {First Embodiment}

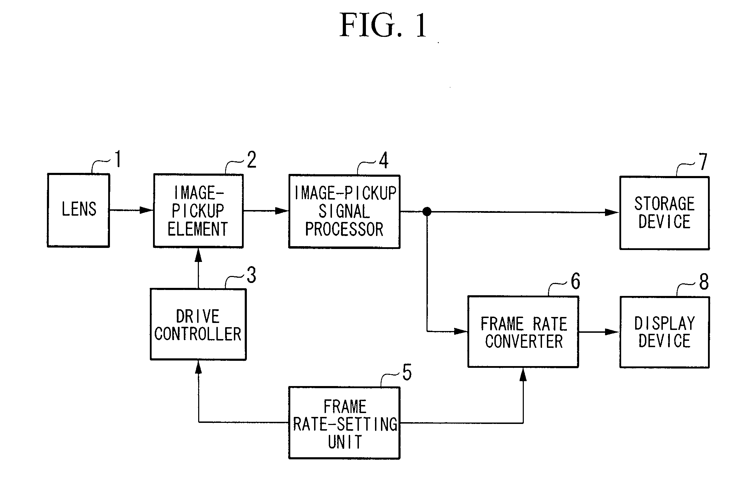

Firstly, a first embodiment will be explained. FIG. 1 shows the configuration of an image-pickup device according to this embodiment. In FIG. 1, a lens 1 collects light from a subject (not shown). The light collected by the lens 1 is entered into an image-pickup element 2. The image-pickup element 2 converts incident light to an electrical signal by photoelectric conversion, and outputs this as an image-pickup signal. The image-pickup element 2 corresponds to variable-frame rate image-pickup, and can output image-pickup signals with various frame rates. A drive controller 3 controls the drive timing, charge accumulation time, and the like, of the image-pickup element 2.

An image-pickup signal processor 4 performs a signal process with respect to the image-pickup signal generated by the image-pickup element 2, such as reducing noise or amplifying the signal level, to enhance the image. A frame rate-setting unit 5 sets the frame rate of the image-pickup signal, based on a manipulation by an operator. The drive controller 3 drives the image-pickup element 2 at various frame rates set by the frame rate-setting unit 5, and makes the image-pickup element 2 output image-pickup signals at various frame rates. For example, the drive controller 3 adjusts the period length of one frame by varying the length of the vertical blanking period or the horizontal blanking period, thereby varying the frame rate of the image-pickup signal outputted from the image-pickup element 2.

The image-pickup signal processed by the image-pickup signal processor 4 is stored in a storage device 7 such as, for example, a semiconductor memory or a hard disk. A frame rate converter 6 receives notification of a value set for the frame rate from the frame rate-setting unit 5, converts the image-pickup signal processed by the image-pickup signal processor 4 to a frame rate for display signal, and outputs a display signal to a display device 8. The display device 8 displays a picked-up image based on the display signal. While not shown in FIG. 1, a process of multiplexing information such as the frame rate set by the frame rate-setting unit 5 onto the display signal is also performed, and the display device 8 displays the present frame rate and the like in addition to the picked-up image.

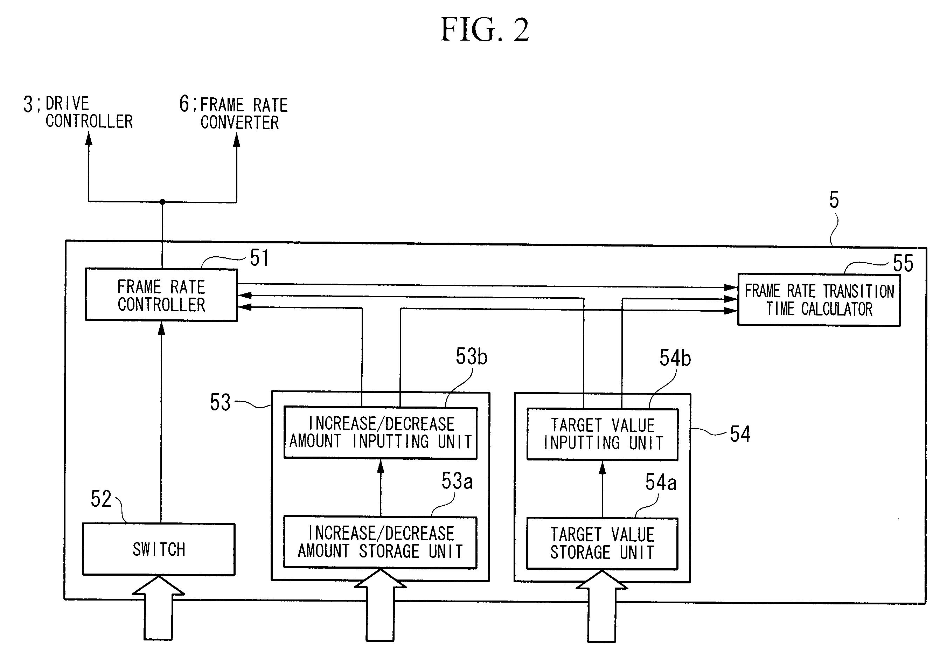

FIG. 2 shows the configuration of the frame rate-setting unit 5. The operator can manipulate a switch 52, even during image-pickup, and thereby set various frame rates for the image-pickup element 2 of FIG. 1 using a frame rate controller 51. The switch 52 is manipulated by the operator during image-pickup to input a modification command relating to the frame rate, and a signal corresponding to the manipulated variable is outputted to the frame rate controller 51. The frame rate controller 51 controls the frame rate based on the modification command relating to the frame rate indicated by a signal inputted thereto.

A frame rate increase/decrease amount setting unit 53 sets the correspondence relationship between the manipulated variable of the switch 52 and a variation relating to increase/decrease per unit time of the frame rate (hereinafter termed 'increase/decrease amount'), and includes an increase/decrease amount inputting unit 53a and an increase/decrease amount storage unit 53b.
The increase/decrease amount inputting unit 53a includes a switch and the like, and is used by the operator for inputting the increase/decrease amount of the frame rate that corresponds to a predetermined manipulated variable of the switch 52. When the operator inputs an increase/decrease amount of the frame rate from the increase/decrease amount inputting unit 53a, the increase/decrease amount of the frame rate is stored in the increase/decrease amount storage unit 53b. The correspondence relationship between the manipulated variable of the switch 52 and the increase/decrease amount of the frame rate is thus set in the image-pickup device.

A target value setting unit 54 sets target values used in image-pickup (maximum speed and minimum speed of the frame rates) and an initial value of the frame rate, and includes a target value inputting unit 54a and a target value storage unit 54b. The target value inputting unit 54a includes a switch and the like, and is used by the operator for inputting target values and an initial value. When the operator inputs the target value and the initial value from the increase/decrease amount inputting unit 53a, the target value and the initial value is stored in the target value storage unit 54b.

In using the switch 52 to vary the frame rate, when the operator sets the maximum speed and minimum speed of the frame rates that he desires for image-pick in the target value setting unit 54 beforehand, the frame rate controller 51 controls the frame rate such that the frame rate set by the target value setting unit 54 varies within a variable range. For example, when the operator has set the maximum speed and minimum speed of the frame rates in the target value setting unit 54 at 300 fps (300 frames per second) and 1 fps, the operator can freely control the frame rate from 1 fps to 300 fps by manipulating the switch 52 while picking up an image. The target values of frame rate are set to obtain the effects of slow reproduction and high-speed reproduction; the operator measures the timing while controlling the frame rate such that, when the frame rate reaches the target value, an image is picked up of a desired movement of the subject.

A frame rate transition time calculator 55 calculates the time taken by a present frame rate of the image-pickup element 2 to reach the maximum speed or minimum speed value set at the target value setting unit 54 in accordance with the manipulated variable of the switch 52 during image-pickup.

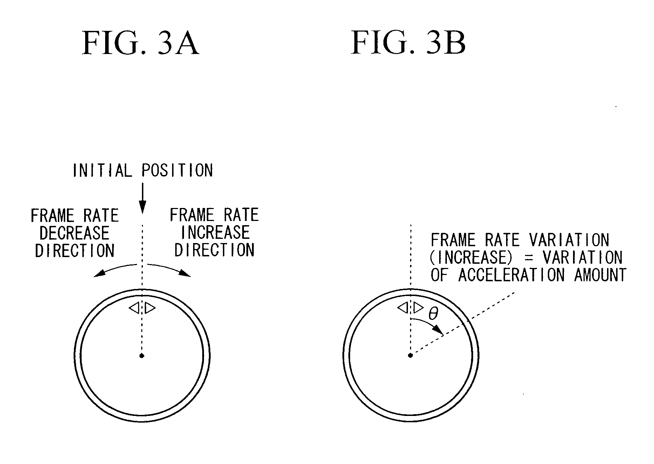

Subsequently, it will be explained how the frame rate varies when the operator has manipulated the switch 52. If the switch 52 is a dial switch as shown in (a) of FIG. 3, when the state of the switch 52 is at an initial position in the middle, the controlled frame rate variation is 0, and, after image-pickup starts, the image-pickup device operates with the frame rate at that initial value. The initial value of the frame rate can also be set to various frame rates using the target value setting unit 54. When the operator manipulates the switch 52 frog the initial position in the frame rate increase direction, the frame rate controller 51 controls the frame rate of the image-pickup device such that it increases, whereas, when the operator manipulates the switch 52 from the initial position in the frame rate decrease direction, the frame rate controller 51 controls the frame rate of the image-pickup device such that it decreases.

The size of the rotation angle θ of the switch 52 shown in (b) of FIG. 3 corresponds to the variation (variable amount) of the frame rate; when the rotation angle θ increases, the variation of the frame rate also increases. By setting the variable amount of the frame rate that varies in accordance with the rotation angle θ of the switch 52 at the frame rate increase/decrease amount setting unit 53, the variable amount of the frame rate can be controlled by manipulating the switch 52. For example, if the operator has set the frame rate increase/decrease amount setting unit 53 such that the frame rate increases by 0.2 fps when the rotation angle θ is manipulated just once in the frame rate increase direction, when the rotation angle θ is rotated 50 degrees in the frame rate increase direction, the frame rate is controlled such that it increases ten frames per second.

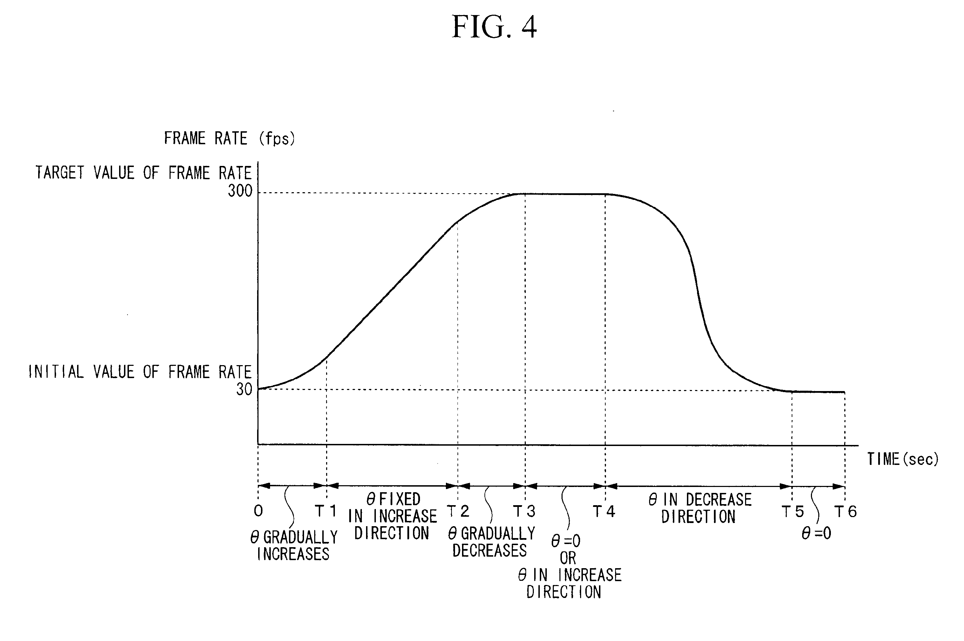

FIG. 4 is a diagram which shows controlling states of the frame rate from image-pickup times 0 to T6 when the operator dynamically varies the frame rate by manipulating the switch 52 while picking up an image. In FIG. 4, the horizontal axis represents image-pickup time, and the vertical axis represents the frame rate during image-pickup. At image-pickup time 0, the switch 52 is at the initial position, and the image-pickup device is operating at the initial state (with the frame rate at the initial value).

Between image-pickup times 0 and T1, the switch 52 is gradually manipulated in the frame rate increase direction. As the rotation angle θ of the switch 52 increases, the frame rate increases from its initial value. Between image-pickup times T1 and T2, the switch 52 is fixed at a predetermined position in the frame rate increase direction. During this time, the rotation angle θ of the fixed switch 52 is constant, as is the variable amount of the frame rate, whereby the frame rate increases linearly over time.

From image-pickup times T2 to T3, the switch 52 is manipulated in a direction such that the rotation angle θ gradually decreases from the constant state. The increase amount of the frame rate gradually decreases in accordance with the rotation angle θ, while the increase steadily continues. At image-pickup time T3, the frame rate of the image-pickup device attains the maximum speed set in the target value setting unit 54. In this state, even if the switch 52 is manipulated further in the frame rate increase direction, the frame rate does not increase but remains fixed at the maximum speed, and the image-pickup device continues operating at the maximum speed of the frame rate until the switch 52 is manipulated in the frame rate decrease direction from the initial position.

Between image-pickup times T4 and T5, the switch 52 is manipulated from the initial position in the frame rate decrease direction. The rotation angle θ of the switch 52 gradually increases in the frame rate decrease direction, and then remains constant for a fixed period before gradually decreasing. This manipulation makes the frame rate vary from the maximum speed to the initial value between image-pickup times T4 and T5.
When the minimum speed of the frame rate is set equal to the initial value of the frame rate at the target value setting unit 54, after image-pickup time T5, even if the switch 52 is manipulated from its initial position in the frame rate decrease direction, the frame rate does not decrease but is fixed at the minimum speed. The image-pickup device then continues operating at the minimum speed of the frame rate (initial value) until the switch 52 is manipulated from the initial position in the frame rate increase direction.

The switch 52 shown in FIG. 3 includes a mechanism whereby, when the operator removes his hand from the switch 52 while varying the rotation angle θ, the switch 52 automatically returns to the initial position. When the operator removes his hand from the switch 52 while varying the rotation angle θ, a setting at the frame rate-setting unit 5 controls the frame rate such that it returns to the initial state at a fixed rate, e.g. in units of 0.1 fps.

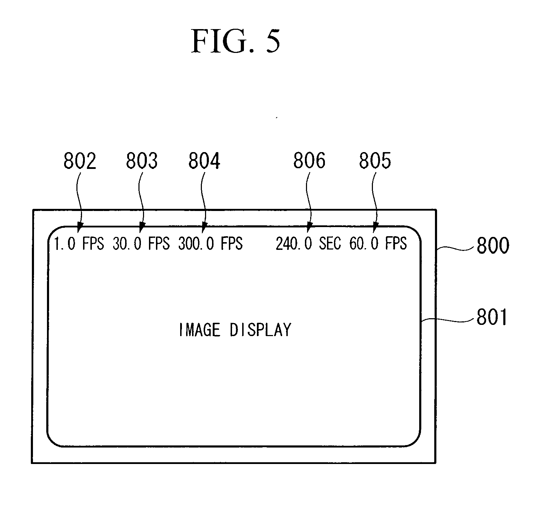

Subsequently, contents of information displayed on a screen of the display device 8 will be explained with reference to FIG. 5. A screen 800 of the display device 8 displays a picked-up image 801, a minimum speed value of frame rate 802, an initial value of frame rate 803, and a maximum speed value of frame rate 804 that are set at the image-pickup signal processor 4 of FIG. 2, and a present value of frame rate 805 of the image-pickup element 2.

When the operator uses the switch 52 to vary the frame rate, a frame rate transition time 806, which is calculated by the frame rate transition time calculator 55 and indicates a time in which the present frame rate reaches the maximum speed value of the frame rate or the minimum speed value of the frame rate, is displayed. For example, let it be supposed that the operator sets the variable amount of the frame rate that varies in accordance with the rotation angle θ of the switch 52 at 0.2 fps each time, sets the minimum speed value of the frame rate, the initial value of the frame rate, and the maximum speed value of the frame rate to 0.1 fps, 30.0 fps, and 300.0 fps respectively, and manipulates the rotation angle θ of the switch 52 during image-pickup by five degrees in the frame rate increase direction, increasing the frame rate from 30.0 fps to 60.0 fps.

At this time, the frame rate transition time calculator 55 divides the difference 240.0 (300.0 - 60.0) fps between the maximum speed value of the frame rate and the present frame rate value by the variable amount of the frame rate 1.0 (0.2 × 5) fps. As a result, 240.0 (240 ÷ 1.0) sec is displayed as the frame rate transition time. Thus the operator can ascertain that, if he maintains the present frame rate control contents during image-pickup, another 240.0 seconds are needed until the frame rate reaches the maximum speed of 300.0 fps.

The frame rate transition time becomes shorter as the variable amount of the frame rate increases, and becomes longer as the variable amount of the frame rate decreases. Therefore, the operator looks at the frame rate transition time being displayed, and manipulates the switch 52 while anticipating the movement of the subject. For example, when the operator anticipates that the time until the subject makes a desired movement will be shorter than the frame rate transition time, he manipulates the switch 52 such as to increase the variable amount of the frame rate; when he anticipates the opposite, he decreases the variable amount of the frame rate. In this way, even when picking up an image by dynamically varying the frame rate, he can control the frame rate such that an image can be picked up of a specific movement of the subject at the target frame rate.

According to the embodiment, since the image-pickup frame rate is controlled based on commands inputted by manipulating the switch 52 during image-pickup in the manner described above, the frame rate can be varied arbitrarily in accordance with the movement of a subject during image-pickup. This enables the operator to vary the frame rate in accordance with the movement of the subject, whatever that movement is, to control the frame rate such that optimum image special effects are obtained at the desired image-pickup timing.

In the embodiment, when the frame rate reaches the target value, it is fixed at that target value. In particular, when the frame rate increases to the maximum speed of the frame rate, and a command to increase the frame rate is being inputted by a manipulation of the switch 52, or when the frame rate decreases to the minimum speed of the frame rate, and a command to decrease the frame rate is being inputted by a manipulation of the switch 52, the frame rate remains fixed at the maximum speed or minimum speed of the frame rate. Due to this, even if the operator does not notice that the frame rate has reached the target value, or when he notices that it has reached the target value but makes a mistaken manipulation, the desired image special effect can be obtained while maintaining the target frame rate.

Furthermore in this embodiment, the display device 8 displays the target value and the present frame rate. Thus the operator can refer to the target value and the present frame rate when he controls the frame rate while anticipating the movement of the subject, and can determine the process of subsequent frame rate transitions.

Furthermore in this embodiment, a correspondence relationship between the manipulated variable (rotation amount, rotation angle) of the switch 52 and the variation (speed variation) of the frame rate is set beforehand by the frame rate increase/decrease amount setting unit 53, and the frame rate controller 51 varies the frame rate by a variation that corresponds to the manipulated variable of the switch 52 during image-pickup. Instead of controlling the variation of the frame rate based on the correspondence relationship between the manipulated variable of the switch 52 and the variation of the frame rate in this way, the value of the frame rate can be controlled based on the correspondence relationship between the manipulated variable of the switch 52 and the value of the frame rate.

It is advantageous when the rotation amount of the switch 52 and the value of the frame rate correspond one-to-one, since this makes it easy for the operator to intuitively ascertain the value of the frame rate. However, when the frame rate is transitioned from the initial value to the target value, in order to smoothly vary the frame rate, the rotation speed of the switch 52 must be kept as constant as possible, and consequently, if the operator is not familiar with the manipulation of the switch 52, there is a possibility that the frame rate will vary discontinuously. Furthermore, when the range of the frame rate between the maximum speed to the minimum speed is set widely, the rotation amount of the switch 52 increases, leading to a possibility that manipulability might be degraded.

On the other hand, when the rotation amount of the switch 52 and the variation of the frame rate correspond one-to-one, if the switch 52 is fixed at the initial state, the frame rate does not vary, whereas, if it is fixed in the frame rate increase direction or the frame rate decrease direction, the frame rate increases or decreases at a fixed speed. Also, the frame rate does not vary discontinuously unless the switch 52 is abruptly rotated by a large amount. Therefore, the frame rate can be varied smoothly. Moreover, even if the rotation amount of the switch 52 is not large, the frame rate can be varied to the target value, achieving better manipulability than when the rotation amount of the switch 52 and the frame rate value correspond one-to-one.

Furthermore in this embodiment, when the frame rate is continuously varied at a variation (speed variation) corresponding to the rotation amount of the switch 52 during image-pickup, the time until the frame rate reaches the target value is calculated by the frame rate transition time calculator 55, and that time is displayed at the display device 8. When the rotation amount of the switch 52 and the variation of the frame rate correspond one-to-one, it is difficult for the operator to intuitively ascertain how he should rotate the switch 52 to make the frame rate reach the target value in accordance with the desired movement of the subject; the aforementioned function is therefore useful. That is, the aforementioned function makes it possible to control the frame rate such that an image can be picked up at the target frame rate with respect to a specific movement of the subject.

### {Second Embodiment}

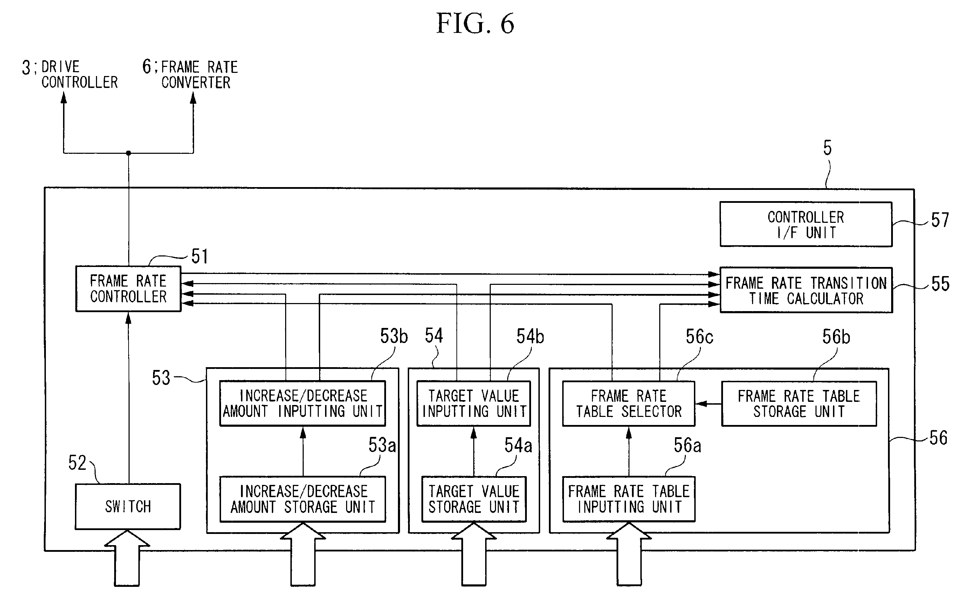

Subsequently, a second embodiment of the invention will be explained. FIG. 6 is a configuration of a frame rate-setting unit 5 according to this embodiment. In this embodiment, a frame rate table-setting unit 56 and a controller I/F unit 57 are provided. The frame rate table-setting unit 56 sets a frame rate table that indicates how to dynamically vary the frame rate when the operator manipulates the switch 52, and includes a frame rate table-inputting unit 56a, a frame rate table storage unit 56b, and a frame rate table selector 56c.

The frame rate table-inputting unit 56a includes switches and the like, and is used by the operator in inputting a desired frame rate table that he has selected from among a plurality of types of frame rate tables prepared beforehand. The frame rate table storage unit 56b stores beforehand a plurality of types of frame rate tables as selection targets. Based on the selection of a frame rate table made by the operator, the frame rate table selector 56c reads the frame rate table from the frame rate table storage unit 56b, and outputs it to the frame rate controller 51 and the frame rate transition time calculator 55.

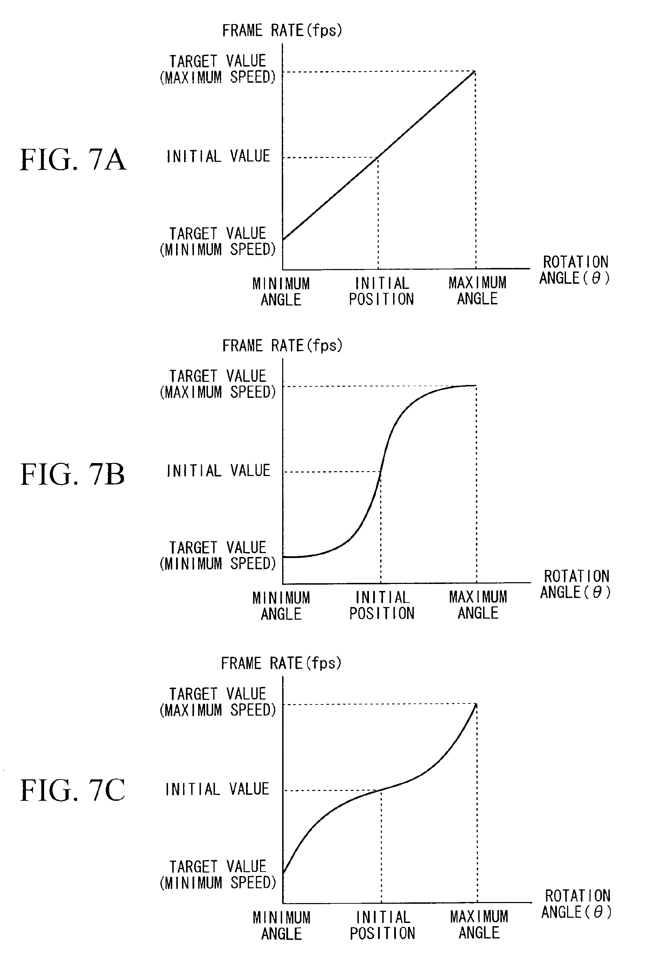

FIG. 7 shows examples of frame rate tables. In each graph of FIG. 7, the horizontal axis represents the rotation angle θ of the switch 52, and the vertical axis represents the frame rate. The frame rate table shown in each graph represents that the frame rate varies smoothly between the minimum speed value of the frame rate and the maximum speed value of the frame rate set in the target value setting unit 54 in conjunction with the vary in the rotation angle θ of the switch 52,.

When the operator selects one of these frame rate tables, and inputs his selection to the frame rate table-setting unit 56, the minimum speed value of the frame rate, the initial value of the frame rate, and the maximum speed value of the frame rate set in the target value setting unit 54 are allocated respectively to the minimum angle of the rotation angle θ of the switch 52 (the maximum angle in the direction for decreasing the frame rate), the initial position, and the maximum angle (the maximum angle in the direction for increasing the frame rate), thereby setting the variable contents of the frame rate controlled by the switch 52.

In this case, the rotation angle θ of the switch 52 and the frame rate correspond one-to-one, and therefore, if the operator wishes to increase the speed of the frame rate, he increases the rotation angle θ, whereas if he wishes to reduce the speed of the frame rate, he reduces the rotation angle θ. Thus the time taken by the frame rate to reach the desired value can be controlled according to the rotation speed of the switch 52. For example, when the operator has selected the frame rate table shown in the graph (a) of FIG. 7, the increase/decrease amount of the frame rate varies linearly in accordance with the size of the rotation angle θ of the switch 52. When the operator has manipulated the switch 52 while keeping the rotation speed constant, the increase/decrease amount of the frame rate can be controlled to a constant value.

The frame rate table shown in the graph (b) of FIG. 7 expresses characteristics where the variation of the frame rate is at the minimum when the rotation angle θ of the switch 52 is at its maximum or minimum, and the variation of the frame rate is at the maximum when the rotation angle θ is near its initial position. The frame rate table shown in the graph (c) of FIG. 7 expresses characteristics whereby the variation of the frame rate is at the maximum when the rotation angle θ of the switch 52 is at its maximum or minimum, whereas the variation of the frame rate is at the minimum when the rotation angle θ is near its initial position. The frame rate controller 51 refers to the frame rate table set at the frame rate table-setting unit 56, and controls the frame rate of the image-pickup device based on the contents of that frame rate table.

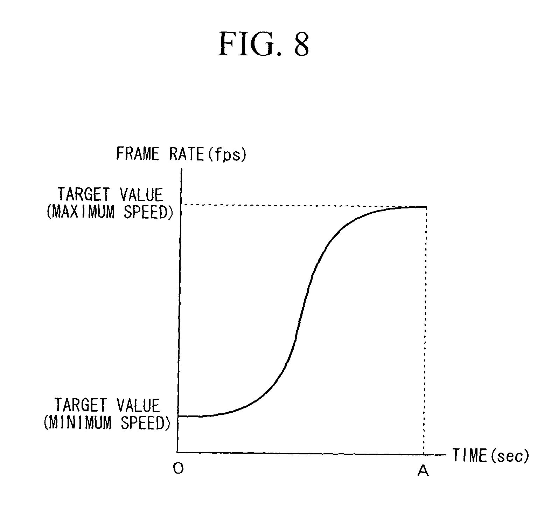

Incidentally, arbitrarily edited data that is separate from the data in these frame rate tables can also be set in the frame rate table-setting unit 56. A frame rate table such as that shown in FIG. 8 can also be set in the frame rate table-setting unit 56. In FIG. 8, the horizontal axis represents image-pickup time, and the vertical axis represents the frame rate. The operator can select this frame rate table, and, by performing a manipulation for starting image-pickup (not shown), he can, without controlling the switch 52, start the operation of the image-pickup device with the frame rate at its minimum speed, and thereafter, in compliance with the content of the frame rate table and the image-pickup time, dynamically vary the frame rate until it reaches its maximum speed at time A, at which point the image-pickup operation ends. Moreover, while the vertical axes in FIGS. 7 and 8 represent the frame rate, they can represent the frame rate increase/decrease amount instead.

The frame rate-setting unit 5 includes the controller I/F unit 57, and can also perform settings relating to frame rates by wired or wireless communications from outside the image-pickup device.

According to this embodiment, in addition to the effects described in the first embodiment, the following advantageous effects can be obtained. In this embodiment, a plurality of types of frame rate tables that indicate correspondence relationships between the manipulated variable (rotation amount, rotation angle) of the switch 52 and the variation (increase/decrease amount) of the frame rate or the value of the frame rate are prepared beforehand, and the frame rate is controlled based on a frame rate table selected from these by the operator.

When the operator selects the frame rate table shown in the graph (a) of FIG. 7 and rotates the switch 52 from its initial position in one direction at a constant speed, the frame rate varies at a constant speed until it reaches the target value. When the operator selects the frame rate table shown in the graph (b) of FIG. 7 and rotates the switch 52 from its initial position in one direction at a constant speed, the frame rate approaches the target value at a comparatively high speed, and slowly varies near the target value. On the other hand, when the operator selects the frame rate table shown in the graph (c) of FIG. 7 and rotates the switch 52 from its initial position in one direction at a constant speed, the frame rate slowly approaches the target value, and varies slightly more quickly near the target value.

Therefore, even if the switch 52 is manipulated in the same manner, different image-pickup special effects are obtained by using different frame rate tables. By enabling the operator to select the frame rate for use in image-pickup from among the plurality of types of frame rate tables in this way, the operator can pick up an image after selecting the type of additional image-pickup special effect.

While embodiments of the invention have been explained with reference to the drawings, the specific configuration is not limited to these embodiments and can be modified in various ways without departing from the main points of the invention. For example, the switch 52 is not limited to a dial switch, and a push-button switch can be used instead. When using a push-button switch, for example, the frame rate can be controlled such that it increases while the operator is pushing the button, and decreases when he releases the button.

The switch 52 can work in conjunction with the zoom state of a lens 1, the frame rate being controlled between a minimum speed value and a maximum speed value in accordance with the shift range from the near-end to the far-end of the zoom. In this case, the switch 52 is made to function as a zoom ring or a zoom lever which the operator manipulates to input modification commands relating to the state of the zoom. The frame rate controller 51 controls the frame rate based on the state of the zoom, which is set by manipulating the switch 52 during image-pickup. For example, when the zoom far-end is set to the minimum speed value of the frame rate, the zoom far-end is set to the maximum speed value, and the variable amount of the frame rate is set to vary evenly in accordance with the shift range of the zoom in the frame rate increase/decrease amount setting unit 53, the operator can vary the frame rate by manipulating the switch 52 while picking up an image at the maximum speed of the frame rate when at the zoom near-end.

Alternatively, in conjunction with a microphone, the frame rate can be controlled between the minimum speed value and the maximum speed value in accordance with the size of sound data inputted to the microphone. In this case, the switch 52 is replaced by a microphone. For example, when sound generated by the subject, by the operator, or by an audio device or the like is inputted to a microphone connected to a camera, based on the input level adjustment range of the microphone, if the setting is such that the frame rate reaches its minimum speed value when the sound level is small, and reaches its maximum speed value when the sound level is large, the operator can perform variable-frame rate image-pickup by controlling the volume of sound inputted to the microphone.

Further, the switch and the like for inputting modification commands relating to the frame rate as described above are not limited to being configured together with the body of the image-pickup device, and can be connected via a wired or wireless unit that is separate from the body of the image-pickup device. By providing this separately, a foot switch that is manipulated by pressing with the foot can be used.

### INDUSTRIAL APPLICABILITY

According to the invention, in variable frame rate image-pickup, since the frame rate of the image-pickup unit is controlled based on commands that are inputted by manipulating a manipulation unit during image-pickup, the frame rate can be arbitrarily varied in accordance with the movement of the subject during image-pickup.

## Claims

1. An image-pickup device comprising:
an image-pickup unit capable of variable-frame rate image-pickup;
a manipulation unit that a user can manipulate to input a modification command relating to a frame rate; and
a frame rate control unit that controls the frame rate of the image-pickup unit based on the modification command inputted by manipulating the manipulation unit during image-pickup.

2. The image-pickup device according to claim 1, wherein, when the frame rate reaches a target value, the frame rate control unit fixes the frame rate at the target value.

3. The image-pickup device according to claim 2, wherein the target value is a maximum value of the frame rate, and, when the frame rate reaches the target value and the modification command indicates a command to increase the frame rate, the frame rate control unit fixes the frame rate at the target value.

4. The image-pickup device according to claims 2 and 3, wherein the target value is a minimum value of the frame rate, and, when the frame rate reaches the target value and the modification command indicates a command to decrease the frame rate, the frame rate control unit fixes the frame rate at the target value.

5. The image-pickup device according to one of claims 2 to 4, further comprising a frame rate display unit that displays the target value and a present frame rate.

6. The image-pickup device according to one of claims 1 to 5, wherein, based on a preset correspondence relationship between a manipulated variable of the manipulation unit and a value of the frame rate, the frame rate control unit varies the frame rate to a value corresponding to a manipulated variable of the manipulation unit during image-pickup.

7. The image-pickup device according to one of claims 1 to 5, wherein, based on a preset correspondence relationship between a manipulated variable of the manipulation unit and a variation of the frame rate, the frame rate control unit varies the frame rate according to the variation corresponding to the manipulated variable of the manipulation unit during image-pickup.

8. The image-pickup device according to claim 7, further comprising a time-calculating unit that, when the frame rate is continuously varied according to the variation corresponding to the manipulated variable of the manipulation unit during image-pickup, calculates the time taken for the frame rate to reach the target value.

9. The image-pickup device according to claim 8, further comprising a time display unit that displays the time taken for the frame rate to reach the target value.

10. The image-pickup device according to one of claims 7 to 9, further comprising:
a storage unit that stores a plurality of types of the correspondence relationships beforehand; and
a selecting unit that, based on a command from a user, selects the correspondence relationship that the frame rate control unit refers to.

11. The image-pickup device according to one of claims 1 to 10, wherein a user manipulates the manipulation unit to input a modification command relating to a zoom state; and
the control unit controls the frame rate based on the zoom state set by a manipulation of the manipulation unit during image-pickup.
